## Europäisches Patentamt

## European Patent Office

## Office européen des brevets

(11) Veröffentlichungsnummer: **0 175 012**
**B1**

(12) **EUROPÄISCHE PATENTSCHRIFT**

(45) Veröffentlichungstag der Patentschrift:
**03.08.88**

(21) Anmeldenummer: **84111169.3**

(22) Anmeldetag: **19.09.84**

(51) Int. Cl.⁴: **E 05 B 35/00**, E 05 C 3/04

(54) Steckschlüsselbetätigbarer, arretierbarer Vorreiberverschluss.

(43) Veröffentlichungstag der Anmeldung:
**26.03.86 Patentblatt 86/13**

(45) Bekanntmachung des Hinweises auf die Patenterteilung:
**03.08.88 Patentblatt 88/31**

(84) Benannte Vertragsstaaten:
**AT BE CH DE FR GB IT LI LU NL SE**

(56) Entgegenhaltungen:
**EP - A - 0 036 141**
**US - A - 3 661 001**
**US - A - 3 907 348**

(73) Patentinhaber: **Ramsauer, Dieter, Am Neuhauskothen 20, D-5620 Velbert 11 (DE)**

(72) Erfinder: **Ramsauer, Dieter, Am Neuhauskothen 20, D-5620 Velbert 11 (DE)**

(74) Vertreter: **Stratmann, Ernst, Dr.-Ing., Schadowplatz 9, D-4000 Düsseldorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen steckschlüsselbetätigbaren, arretierbaren Vorreiberverschluss, mit einem in einem Verschlussgehäuse betätigbaren, drehbar und arretierbar gelagerten Schliesskern, wobei der Schliesskern aus einem vorderen Teilstück zur Aufnahme des Steckschlüssels, einem Rumpf oder Mittelstück und einem prismatischen Fuss oder hinteren Teilstück besteht und mit einem Sperrelement mit Nuten zur Arretierung des Sperrelements bei abgezogenem Schlüssel, welches Sperrelement an dem vorderen Teilstück des Schliesskerns gegen Druckfederbelastung der Druckfeder axial entlang dem Schliesskern gleitend bewegbar angeordnet ist.

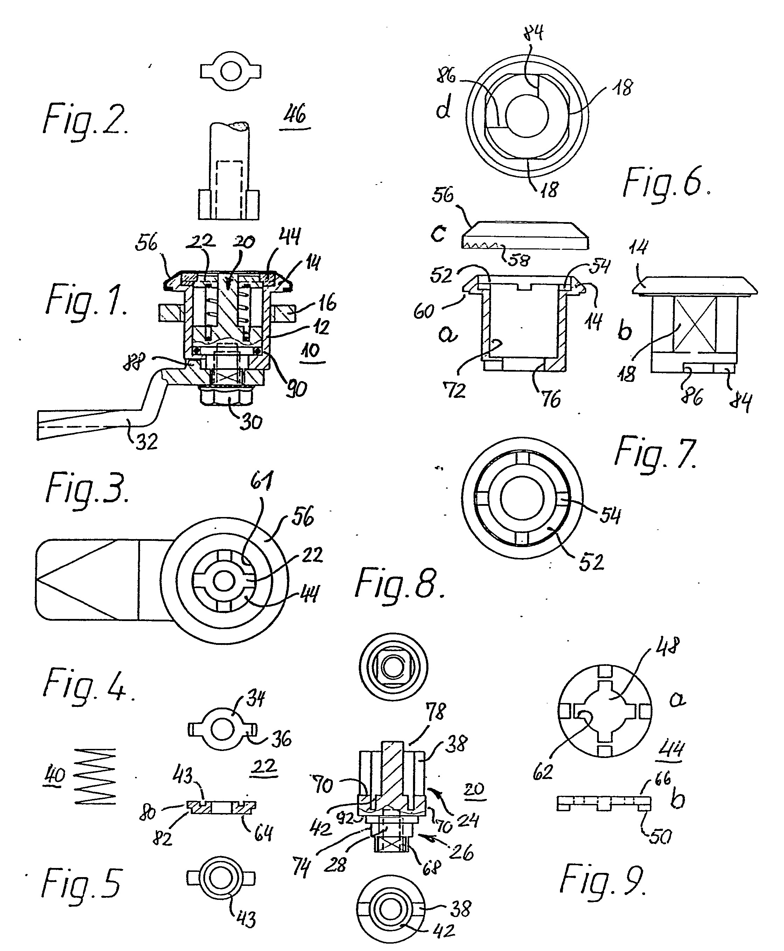

Ein derartiger Vorreiberverschluss ist in der Form einer Fensterverriegelungseinrichtung aus der US-A-3907348, von welcher der Oberbegriff des unabhängigen Anspruchs 1 ausgeht, bereits bekannt, siehe die dortige Fig. 3 und Spalte 3, 1. und 2. Absatz. Die die Vorreiberzunge haltende Betätigungswelle ist in einem Gehäuse gelagert, das auf die Aussenfläche des Fensterrahmens aufgeschraubt wird und in das Material des Rahmens nicht hineinreicht. Dieser Vorreiberverschluss steht einerseits zu weit in den Raum vor und andererseits gibt er der Betätigungswelle nahe der Vorreiberzunge keinen seitlichen Halt.

Die beweglichen Teile des bekannten Vorreiberverschlusses sind von hinten in das Verschlussgehäuse eingeschoben und werden dann von einer Abschlussplatte festgehalten, die am Verschlussgehäuse mittels breitgedrückter Gehäusevorsprünge befestigt wird. Damit wird diese Platte, die zudem noch das Lager für die Betätigungswelle bildet, stark belastet.

Es sind auch Vorreiberverschlüsse für Türanwendungen mit durch das Türblatt hindurchsteckbarem Gehäuse bekannt geworden, die dadurch eine höhere Stabilität aufweisen und – da Teile des Verschlusses in das Türblatt bzw. in den hinter dem Türblatt liegenden Raum verlegt werden können – weniger weit nach vorne über das Türblatt vorstehen. Derartige hindurchsteckbare Gehäuse aufweisende Vorreiberverschlüsse werden insbesondere für elektrische Schaltschränke, aber auch bei Schränken der Lebensmittelindustrie eingesetzt, wobei zum Verschluss einer Schranktür oft auch mehrere Verschlüsse eingesetzt werden, die mittels Doppelbartschlüssel oder auch Mehrkantdornschlüssel, insbesondere Vierkantdornschlüssel betätigt werden. Bei vielen Anwendungen, wie bei Krananlagen, Baggereinrichtungen, Mischeinrichtungen, Mühlen usw. unterliegen die Schaltschranktüren und deren Verschlüsse starken Rüttel- und Vibrationseinwirkungen, die bei ungesicherten Verschlüssen zu einem ungewollten und oftmals gefährlichen Öffnen der Schranktür, insbesondere Schaltschranktür, führen. Ein weiteres Problem taucht dann auf, wenn ein Schlüsselfang für den Verschluss zur Anwendung kommt, der dazu dient, das Öffnen derartiger Türen durch Unbefugte mit Hilfe von nicht zum Öffnen der Tür vorgesehenen Schlüsseln sowie Werkzeugen zu verhindern oder zumindest zu erschweren. Der Schlüsselfang weist einen dem Querschnitt des Schlüssels angepassten Durchbruch auf und erschwert dadurch das Einführen von Schlüsseln oder Werkzeugen mit anderer Profilform oder macht dies sogar unmöglich.

Für die Zellentüren oder Schranktüren von elektrischen Schaltanlagen beispielsweise sind gemäss deutscher Norm Doppelbartschlüssel bestimmter Abmessungen vorgesehen, die zwei sich gegenüberliegende Schlüsselbärte sowie eine Axialbohrung von jeweils genormten Abmessungen aufweisen. Zu diesen Doppelbartschlüsseln gehört ein ebenfalls hinsichtlich seiner Abmessungen genormtes Schlüsselloch, das beispielsweise vom Schlüsselfang gebildet wird.

Bei Verschlüssen dieser Art tritt bei Rüttelbelastung das Problem auf, dass die Betätigungswelle des Verschlusses, die an ihrem Ende entsprechende, von den Schlüsselbärten zu erfassende Einsenkungen besitzt, aufgrund von durch das Rütteln verursachter Verschiebungen nicht mehr genau in der eingeschlossenen bzw. ausgeschlossenen Stellung steht, d.h., dass diese Einsenkungen zu den Durchbrüchen des Schlüsselloches nicht genau fluchten. In diesem Falle ist das Einstecken des Doppelbartschlüssels nicht möglich. Es muss erst in umständlicher Weise mit Hilfswerkzeugen erreicht werden, dass die Einsenkungen zu den Durchbrüchen des Schlüsselloches wieder genau ausgerichtet sind, ehe der Doppelbartschlüssel (bzw. Mehrkantdornschlüssel od. dgl.) eingesteckt werden kann.

Derartige ungewollte Verschiebungen können auch durch Vibrationen eintreten, die z.B. durch die innerhalb der Schaltschränke angeordneten Geräte entstehen, oder aber auch durch den Transport der Schränke, z.B. beim Transport von Schaltschränken von der Fabrik zum Aufstellungsort auf Lastwagen. Am Aufstellungsort haben sich dann oft die Verschlüsse um ein Stück verschoben und die Schlösser können nicht mehr oder nicht mehr ohne weiteres mit dem für sie vorgesehenen Schlüssel geöffnet werden, was für den Benutzer sehr ärgerlich ist.

Man hat daher arretierbare steckschlüsselbetätigbare Vorreiberverschlüsse mit Durchsteckgehäuse entwickelt, die derartige ungewollte Verschiebungen bei Vibrationen verhindern. So zeigt die US-A-3661001 eine steckschlüsselbetätigbare Arretierungsvorrichtung, und auch aus der US-A-3995463 ist eine derartige, etwas anders aufgebaute Arretierungsvorrichtung bekannt. Die aus diesen beiden Druckschriften bekannten Konstruktionen haben jedoch den Nachteil, dass die auf den Durchmesser des durch die Tür hindurchzusteckenden Gehäusekörpers bezogene Baulänge noch verhältnismässig gross ist, sie beträgt im Falle der US-A-3661001 das 1,7fache, im Falle der US-A-3995463 sogar das 1,9fache dieses Durchmessers, wenn man die zur Befestigung des Vorreibers od. dgl. benötigte Schraube unberücksichtigt lässt. Derartig grosse Baulängen bezüglich des Gehäusedurchmessers sind aber für Vorreiberverschlüsse nicht sonderlich gut geeignet, weil bei diesen Verschlüssen meist nur sehr wenig axialer Raum zwischen der zu verschliessenden Tür und der Vorreiberanordnung zur Verfügung steht, wie beispielsweise die Deutsche Gebrauchsmusterschrift 7 621 270.9, die einen derartigen Vorreiberverschluss zeigt, deutlich werden lässt. Die genannten Druckschriften lassen auch nicht erkennen, wie durch Änderung der dort dargestellten Konstruktion die Baulänge wesentlich verringert werden kann.

Ein weiterer Nachteil der genannten Konstruktionen ist darin zu sehen, dass der Aufbau der Arretierungsvorrichtung und des zugehörigen Schlüsselfangs so getroffen ist, dass das Einschieben des Schlüssels in zwei Stufen erfolgt. Während der ersten Stufe muss zunächst (siehe die US-A-3 661 001) gegen die Kraft einer ersten Feder ein Schlüsselabstreifer zurückgeschoben werden, bis dieser einen durch eine zweite, stärkere Feder vorgespannten Flansch erreicht. Mit der jetzt beginnenden zweiten Stufe muss gegen die Kraft der zweiten Feder der Schlüssel weiter nach innen geschoben werden, bis die Arretierungsvorrichtung entriegelt ist. Eine Bedienungsperson, die diese Zweistufigkeit nicht kennt, wird schon nach Beendigung der ersten Stufe annehmen, dass die Entriegelung erreicht ist und den Verschluss durch Drehen des Schlüssels zu öffnen versuchen und dabei die Arretierungsvorrichtung möglicherweise beschädigen. Die Bedienungsperson kann auch optisch nicht erkennen, wann die Verriegelung gelöst ist, sie muss dies vielmehr durch «Gefühl» feststellen. Ganz ähnliche Verhältnisse zeigt die US-A-3 995 463, auch wenn dort durch die Form des Schlüssels möglicherweise ein optischer Hinweis auf das Erreichen der entriegelten Stellung sich ergibt. Aber auch hier müssen vorzeitige Öffnungsversuche von der Arretierungsvorrichtung aufgenommen werden. Ein noch weiterer Nachteil ist, dass der Schlüssel in jeder Stellung abziehbar ist und beim Loslassen durch die Federkraft sogar zwangsweise ausgestossen wird.

In dieser Hinsicht verbessert ist eine Arretierungsvorrichtung, die in der EU-A-0 036 141 des Anmelders beschrieben wird. Insbesondere ist hier das Verhältnis zwischen axialer Länge (ohne Zungenbefestigungsschraube) und radialem Durchmesser des Durchsteckteils des Gehäuses erheblich verkleinert, ausserdem ermöglicht die Konstruktion einen Schlüsselfang ohne Baulängenvergrösserung, der den Schlüssel in Zwischenstellungen festhält, dem Benutzer optisch einen Hinweis auf die Stellung der Arretierungsvorrichtung gibt und gleichzeitig den Schlüssel gegen Drehbewegung sichert, solange die Arretierungsvorrichtung nicht entriegelt ist (so dass die Arretierungsvorrichtung nicht durch Schlüsselbetätigungsdrehmomentkräfte belastet wird).

Die Baulänge dieser bekannten Arretierungsvorrichtung bezüglich des Durchsteckgehäusedurchmessers beträgt nur noch das 1,4- bis 1,6fache. Ausserdem ermöglicht die Anordnung ein Festhalten des Schlüssels in Zwischenstellungen, es ist nur ein einstufiges Einschieben des Schlüssels notwendig, ausserdem erkennt die Bedienungsperson optisch, ob sich der Schlüsselbart noch im Schlüsselfang befindet und wird nicht durch vergebliche Drehversuche frustriert, die zudem die Arretierungsvorrichtung unnötig beanspruchen würden. Versucht die Bedienungsperson trotzdem, den Schlüssel vorzeitig zu drehen, nimmt der robustere Schlüsselfang das Drehmoment auf, nicht die empfindlichere (da kleinere) Arretierungsvorrichtung in dem Verschluss. Da die Arretierungsvorrichtung vor dem Schlüsselbart freikommt, besteht grundsätzlich nicht die Gefahr, dass die Arretierungsvorrichtung durch Fehlbedienung belastet wird. Sie muss nur durch Rütteln u. dgl. auftretende Drehbewegungen verhindern.

Dieser bereits sehr vorteilhafte Vorreiber lässt sich jedoch noch weiter verbessern. Es hat sich nämlich gezeigt, dass die für den Zusammenhang des Vorreibers erforderliche Einsickung oder Ringeindrückung bei manchen Anwendungen noch zu unsicher ist, zumal diese die volle vom Vorreiber übertragene Schliesslast aufnehmen muss. Auch hat sich beim Betrieb ergeben, dass – besonders bei ungünstigen Lichtverhältnissen und ungeübten Bedienungspersonen – nicht sofort erkennbar wird, wie die Arretierung funktioniert. Besonders in Notsituationen kann sich dies ungünstig auswirken. Zudem ergeben sich Probleme, wenn als Schlüssel ein Drei- oder Vierkant verwendet werden soll, da dann keine Hinterschneidung vorhanden ist.

Schliesslich neigt auch der letztgenannte Vorreiber – wie auch die beiden zuerst beschriebenen Vorreiber und der Vorreiberverschluss der eingangs genannten Art – dazu, Schmutz und Staub in seinem Vorderbereich zu sammeln.

Aufgabe der Erfindung ist es, den steckschlüsselbetätigbaren, arretierbaren Vorreiberverschluss der eingangs genannten Art unter Beibehaltung der Vorteile, die er gegenüber anderen bekannten Konstruktionen aufweist, noch dahingehend weiter zu verbessern, dass der konstruktive Zusammenhalt noch besser und der Verschluss damit noch stärker belastbar ist, – ohne dass dadurch die Montage sich verkompliziert –, dass die Art der Bedienung noch leichter erkennbar wird, und dass insbesondere der Vorreiberverschluss in seinem Vorderbereich keinen Schmutz und keinen Staub mehr ansammeln kann.

Gelöst wird die Aufgabe durch die kennzeichnenden Merkmale des Hauptanspruchs.

Dadurch, dass der Zusammenbau des Verschlusses nicht mehr, wie beim Stand der Technik, von hinten erfolgen muss, sondern von vorn, verbessert sich die Sicherheit des Zusammenhalts beim späteren Betrieb, auch bei stärkerer Belastung. Der Verschluss kann mit Durchsteckgehäuse versehen sein und steht daher nur noch sehr wenig über das Türblatt vor. Insbesondere besitzt der Verschluss bei abgezogenem Schlüssel keine zurückspringenden Bereiche mehr, so dass sich die Gefahr verringert, dass sich Schmutz und Staub im Vorderbereich des Verschlusses ablagern, was in der Lebensmittelindustrie von grossem Vorteil ist.

Im Vergleich zu anderen bekannten, ein durchsteckbares Gehäuse aufweisenden Vorreiberverschlüssen ist die weiter verminderte Baulänge von Vorteil, praktisch wird die übliche Länge von nichtarretierbaren Vorreiberverschlüssen erreicht. Auch ist die Bedienung wesentlich verbessert, da sofort erkennbar ist, wie der Verschluss zu entriegeln ist, nämlich dadurch, dass «etwas eingeschoben» werden muss.

Ein weiterer Vorteil ist noch darin zu sehen, dass die bisher bei Verwendung von Vierkantschlüsseln auftretenden Probleme entfallen: Die Anwendung von Vierkantschlüsseln (oder anderen prismatischen Schlüsselformen) war nämlich deshalb mit Problemen behaftet, weil diese ohne Hinterschneidung arbeiten und dadurch das Verriegelungsprinzip beeinträchtigen.

Eine mechanische Verbesserung wird dadurch erreicht, dass die Maske bei abgezogenem Schlüssel für den Kopf ein Lager bildet, das von der Vorreiberzunge ausgehende Hebellasten an das Gehäuse ableitet. Günstig ist auch, dass die Achsen-Zungen-Einheit fest im Lager und damit der Verschluss funktionsfähig bleibt, selbst wenn die Arretierungsvorrichtung in Form der Kombination von Maske und Sperrelement defekt sein sollte.

Die Befestigungsart der erfindungsgemäss eingesetzten Maske kann unterschiedlich sein, beispielsweise kann die Maske durch eine Blechkappe gehalten oder von dieser gebildet werden, die den Aussenrand des Schlüsselfangs umgreift. Alternativ kann die Maske aber auch im Schlüsselfang verklebt, verstemmt oder fest eingepresst sein.

Bei Anwendung von Doppelbartschlüsseln kann die Maske entweder einen einfachen Doppelschlitz aufweisen, was bedeutet, dass der Schlüssel bei geöffnetem Verschluss nicht abziehbar ist. Allerdings muss in diesem Falle der Verschluss für Rechts- bzw. Linksbetrieb unterschiedlich ausgeführt werden.

Soll der Schlüssel jedoch auch bei geöffnetem Verschluss abziehbar sein, was beispielsweise sinnvoll ist, wenn mit nur einem Schlüssel mehrere an einem Türblatt befindliche Verschlüsse geöffnet werden sollen, können der Maske zwei zueinander senkrechte Doppelschlitze gegeben werden, was noch den weiteren Vorteil hat, dass dann mit einer einzigen Schlosskonstruktion sowohl Rechts- wie auch Linksbetrieb möglich ist.

Die Erfindung wird nachfolgend anhand von Ausführungsbeispielen näher erläutert, die in den Zeichnungen dargestellt sind. Es zeigt:

Fig. 1 in einer Axialschnittansicht einen erfindungsgemäss ausgestalteten, steckschlüsselbetätigbaren und arretierbaren Vorreiberverschluss;

Fig. 2 einen zugehörigen Doppelbartschlüssel in Seitenansicht und Draufsicht;

Fig. 3 eine Draufsicht auf den Verschluss der Fig. 1;

Fig. 4 bis 9 Einzelteile des in Fig. 1 dargestellten Verschlusses, teilweise in unterschiedlichen Ansichten;

Fig. 10 eine andere Ausführungsform des steckschlüsselbetätigbaren arretierbaren Vorreiberverschlusses gemäss der Erfindung wiederum in einer Axialansicht, jedoch hier mit demontierter (nicht dargestellter) Vorreiberzunge;

Fig. 11 einen zugehörigen Vierkantschlüssel;

Fig. 12 bis 15 wiederum Einzelteile des in Fig. 10 dargestellten Verschlusses in teilweise unterschiedlichen Ansichten.

In Fig. 1 ist ein steckschlüsselbetätigbarer, arretierbarer Vorreiberverschluss gemäss einer ersten Ausführungsform der Erfindung in einer axialen Schnittansicht wiedergegeben. Der Vorreiberverschluss 10 umfasst ein zylindrisches Gehäuse 12, das in einen Schlüsselfang 14 ausläuft, wobei das Gehäuse 12 an seiner Zylinderaussenseite ein Gewinde trägt, um das Gehäuse mittels einer Mutter 16 innerhalb eines Durchbruchs im Türblatt festlegen zu können. Das Gehäuse ist in der Fig. 6 nochmals als Einzelteil dargestellt, und zwar in einer axialen Schnittansicht (Fig. 6a), in einer Ansicht von unten (Fig. 6d) und in einer Seitenansicht (Fig. 6b), wobei aus den Fig. 6b und 6d hervorgeht, dass das Gehäuse an zumindest einer Seite eine Abflachung 18 besitzt, die mit einem entsprechenden sehnenartigen Vorsprung des Stanzloches im Türblatt derart zusammenarbeitet, dass sich eine Drehsicherung ergibt. Fig. 7 zeigt das Gehäuse von oben. Es können auch zwei sich gegenüberliegende oder auch vier jeweils im Abstand von 90° zueinanderliegende derartige Abflachungen vorgesehen werden, falls das Gehäuse in z.B. zwei oder vier unterschiedlich gedrehten Stellungen montierbar sein soll. Die Fig. 6d, eine Ansicht von unten auf das Gehäuse, zeigt eine Ausführungsform mit vier derartigen Abflachungen 18.

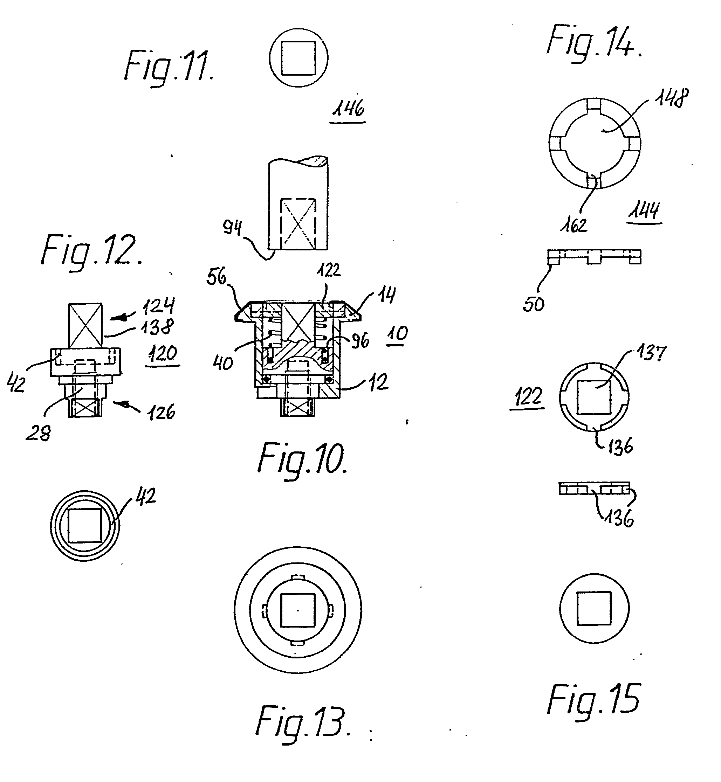

Innerhalb des Gehäuses 12 des Vorreiberverschlusses 10 ist ein Schliesskern oder eine Schliesswelle 20 drehbar angeordnet, wobei der Schliesskern 20 aus einem vorderen Teilstück 78 zur Aufnahme des Steckschlüssels 46, einem Rumpf oder Mittelstück 24 und einem prismatischen, insbesondere quadratischen Fuss oder hinterem Teilstück 26 besteht, das an seinem dem vorderen Teilstück 78 abgewandten Ende eine axiale, mit Gewinde versehene Einsenkung wie Gewindesackloch 28 aufweist, in das eine Befestigungsschraube 30 für die Vorreiberzunge 32 aufgenommen ist. Ein Sperrelement 22, das in Fig. 5 als Einzelteil dargestellt ist, ist an dem vorderen Teilstück 78 des Schliesskerns 20 drehstarr, aber axial gleitend angeordnet, bei der hier dargestellten Ausführungsform dadurch, dass das Sperrelement 22, das die Form eines Ringes 34 besitzt, zwei radial von diesem Ring weg zeigende Nasen 36 aufweist, die in entsprechende Einschnitte 38 des Schliesskerns 20 gleitend aufgenommen sind. Bei der in den Fig. 10 bis 15 dargestellten Ausführungsform besitzt das Sperrelement 122 dagegen einen prismatischen, nämlich quadratischen Durchbruch 137, der auf einem entsprechend konturierten Teil des vorderen Teilstücks 138 gleitet. Eine Druckspiralfeder 40, dargestellt in Fig. 4, ist derart um den Schliesskern 20 herum angeordnet, dass sie die Druckfederbelastung für die Arretierung ergibt, wobei die Druckspiralfeder 40 einerseits sich auf eine von dem hinteren Teilstück 126 gebildete Ringschulter 42 abstützt, andererseits auf den an dem vorderen Teilstück gleitend angeordneten Sperrelement 22, das eine an den Schlüsselbart angepasste Kontur besitzt. Man vergleiche beispielsweise die Kontur des in Fig. 5 dargestellten Bauteils 22 und das dazu passend ausgebildete Bauteil gemäss Fig. 8 mit dem zugehörigen Doppelbartschlüssel der Fig. 2, oder auch die Kontur des Bauteils 122 der Fig. 15 (in Verbindung mit dem Bauteil 124 der Fig. 12) mit dem entsprechenden Vierkantschlüssel, der in Fig. 11 zu erkennen ist.

Um die eigentliche Arretierung zu verwirklichen, ist eine Maske 44 vorgesehen, siehe in Fig. 9a eine Draufsicht und in Fig. 9b eine Seitenansicht, die mittig einen den Schlüsselbart 46 in seiner jeweiligen Form, beispielsweise die in Fig. 2 gezeigte Doppelbartform, in zumindest einer Schlüsselstellung durchlassenden Durchbruch 48 aufweist, aber auch beispielsweise einen solchen Durchbruch aufweisen kann, dass der Schlüsselbart 46 in zwei zueinander senkrechten Stellungen hindurchgesteckt werden kann, wie es auch in Fig. 9 dargestellt ist.

Diese Maske 44 besitzt ausserdem axial in das Gehäuseinnere weisende Vorsprünge 50, die es ermöglichen, die Maske stirnseitig, also von vorne in eine entsprechende Einsenkung 52 drehstarr einzusetzen, wobei von der Einsenkung 52 ausgehende Rücksprünge 54 an den Stellen der Vorsprünge 50 für eine Drehstarrheit Sorge tragen, siehe die Fig. 6a und die Fig. 9b.

Diese Maske 44 wird gemäss der Darstellung von Fig. 1 durch eine Blechkappe 56 (Fig. 6c) am axialen Herausfallen gehindert, wobei nach Montage der in den Fig. 8, 4, 5 und 9 dargestellten Teile von der Stirnseite her nur noch diese Blechkappe 56 auf den Schlüsselfang 14 des Gehäuses 12 aufgesetzt und das untere freie Ende 58 in einen entsprechenden Rücksprung 60 auf der Auflagefläche des Gehäuseschlüsselfanges auf dem Türblatt umgebördelt zu werden braucht, wie es in Fig. 6 in vorbereitender Stellung und in Fig. 1 in Endstellung zu erkennen ist.

Es ist klar, dass die Befestigung der Maske nicht durch eine derartige Blechkappe erfolgen muss, wenn dies auch die ästhetisch besonders günstige Ausführungsform darstellt. Alternativ könnte die Maske nämlich auch in ihrem vom Schlüsselfang gebildeten Bett verklebt, verstemmt oder auf andere Weise fest eingepresst sein. Sie kann sogar mit der Blechkappe einstückig sein. In diesem Falle könnte auf eine Drehsicherung der Maske verzichtet werden.

Neben dem bereits geschilderten, besonders einfachen Montagevorgang hat die in den Fig. 1 bis 8 dargestellte Ausführungsform noch den besonderen Vorteil, dass die Bedienung besonders einfach und übersichtlich ist: Zunächst wird der Schlüssel, hier gemäss Fig. 2 ein Doppelbartschlüssel, durch den von der Blechkappe 56 kreisförmig freigehaltenen Bereich 61 (Fig. 3) hindurchgeführt, bis er die Maske 44 mit dem in dem Maskenprofil 62 arretierend durch Federkraft eingeschoben gehaltenen Sperrelement 22 erreicht. In diesem arretierten Zustand liegt die vordere Stirnfläche 64 des Sperrelementes 22 geringfügig hinter der vorderen Stirnfläche 66 der Maske 44, wie aus Fig. 1 hervorgeht. Die Bedienungsperson erkennt daher sofort die eine Stellung (oder hier die zwei Stellungen), in der die Doppelbartvorsprünge des Doppelbartschlüssels 46 nicht mehr auf der Maske 44, sondern auf dem Sperrelement 22 aufliegen. In dieser Stellung lässt sich der Schlüssel 46 in das Schloss hineindrücken, weil Sperrelement 22 unter Zusammenpressen der Feder 40 in seiner Axialführung, gebildet durch das Bauteil 20 der Fig. 8, zurückweichen kann. Gleichzeitig dringen die zwei Bärte des Schlüssels in dem vom Bauteil 20 gebildeten Schlitz 38 ein. Sobald der Doppelbart des Schlüssels aus der Maske 48 freikommt, kann dieser Schlüssel gedreht werden und nimmt dabei die Teile 22 und 20, also das Sperrelement und den Schliesskern bzw. die Schliesswelle mit. Mit der Schliesswelle 20 verdreht sich aber auch die auf seinem prismatischen Ende 68 aufgesetzte und mit der Befestigungsschraube 30 gehaltene Vorreiberzunge 32.

Die Feder 40 stützt sich innerhalb einer Ringnut 42 mit einer solchen Tiefe ab, dass sie in diese völlig eingedrückt werden kann. Das hat den Vorteil, dass sich für den Doppelbartschlüssel 46 an der Auflagefläche 70 des Schliesskerns 20 eine definierte Anschlagstellung ergibt, so dass die Bedienungsperson ohne Probleme merkt, an welcher Stelle nicht mehr weiter eingedrückt zu werden braucht, sondern statt dessen gedreht werden kann. Diese eindeutige Anschlagstellung ist bei dem Stand der Technik nicht vorhanden.

Nach dem Verdrehen um beispielsweise 90° (dies möge der Offenstellung entsprechen) lässt sich bei der in Fig. 9 dargestellten Konturmaske 44 der Schlüssel wieder abziehen. Soll der Schlüssel jedoch in dieser Stellung nicht abziehbar sein, wird man die Maske nicht mit dem dargestellten kreuzförmigen Profil 62 versehen, sondern nur mit einem Maskenprofil, das im wesentlichen dem Profil des Doppelbarts des Schlüssels 46 entspricht.

Der Schliesskern bzw. die Schliesswelle 20 hat noch den Vorteil, dass sie nahe ihrer beiden Enden eine Wellenführung besitzt, wodurch sich trotz der sehr kurzen Baulänge eine stabile Führung der Schliesswelle mit der daran befestigten Vorreiberzunge ergibt. Zum einen ergibt sich eine Schliesswellenlagerung im Bereich des Rumpfes oder Mittelstückes, insbesondere im geschlossenen kreisförmigen Umfangsbereich 70, siehe Fig. 8, der sich innerhalb des Gehäuses 10 im Bereich seiner Innenwand 72 abstützt, siehe Fig. 6a. Eine weitere Führung wird von dem Wellenstumpfbereich 74 erbracht, der in dem entsprechenden Durchbruch 76 des Gehäuses 10 gebildet wird. Schliesslich wird jedoch auch noch das obere Ende 78 der Schliesswelle 78 geführt, und zwar dadurch, dass sich dieses obere Ende 78 in dem Sperrelement 22 abstützen kann, das wiederum im Ruhezustand von der Maske 44 in radialer Richtung gestützt wird, während in Arbeitsstellung (bei eingeschobenem Schlüssel) diese Funktion vom Schlüssel übernommen wird. Besonders wichtig ist aber die exakte Führung in Ruhestellung, da diese die Spielfreiheit der Verschlusswirkung bestimmt. Die Führung des Sperrelements 22 innerhalb der Maske erfolgt über die beiden Seitenflächen 80 und 82 der vorspringenden Nasen 36, die bei der hier dargestellten Bauweise zu der Zunge 32 ausgerichtet sind und daher von der Zunge 32 ausgehende Hebelwirkungen problemlos auf die Maske und damit auf das Gehäuse übertragen können.

Es sei noch ergänzt, dass in üblicher Weise das Gehäuse Drehbegrenzungsanschläge 84, 86 für eine von der Zunge 32 ausgehende Anschlagsnase 88 bilden kann.

Der erfindungsgemässe Vorreiberverschluss lässt sich auch ohne Schwierigkeiten gasdicht gestalten, beispielsweise durch die Anordnung einer O-Ringdichtung 90, die in einem schulterartigen Rücksprung 92 im Mittelstück 24 untergebracht werden kann.

Die in den Fig. 10 bis 15 dargestellte Ausführungsform ist im wesentlichen gemäss dem gleichen Prinzip aufgebaut, jedoch an einen Vierkantschlüssel 146 angepasst, wie er in Fig. 11 dargestellt ist. Beim Einführen dieses Schlüssels 146 durchstösst dessen Vorderende zunächst wiederum die um den Schlüsselfang 14 herumgelegte, die Maske 144 haltende Blechkappe 56, nimmt dann das Sperrelement 122 schiebend in Eingriff und umgreift gleichzeitig das prismatische Ende 138 des Schliesskerns 120 (siehe die Fig. 12 und 15). Gegen die Kraft der Feder 40 verschiebt der Schlüssel das Sperrelement 122 nach unten und drückt dabei die Vorsprünge 136 des Sperrelements 122 aus entsprechenden Nuten 162 des Maskenprofils der Maske 144, siehe Fig. 14. Sobald das Sperrelement 122 aus der Maske 144 freikommt, spätestens jedoch dann, wenn die Schlüsselstirn 94 die vom Schliesskern 120 gebildete Auflagefläche 96 erreicht, wird die Bedienungsperson den Schliesskern oder die Schliesswelle 120 um den gewünschten Drehwinkel von z.B. 90° verdrehen und den Schlüssel wieder abziehen können, wobei wiederum eine Verriegelung durch ein Eingreifen der Vorsprünge 136 des Sperrelements 122 in den Nuten 162 der Maske 144 erreicht wird.

Auch hier werden wieder die gleichen günstigen Schliesswellenführungen an drei Stellen erreicht, ebenso ist auch hier eine Dichtung ohne Platzprobleme unterzubringen, obwohl die gesamte Konstruktion des arretierbaren Vorreiberverschlusses nicht grösser ist als die der üblichen nichtarretierbaren Vorreiberverschlüsse.

**Patentansprüche**

1. Steckschlüsselbetätigbarer, arretierbarer Vorreiberverschluss (10), mit einem in einem Verschlussgehäuse (12) betätigbaren, drehbar und arretierbar gelagerten Schliesskern (20), wobei der Schliesskern (20) aus einem vorderen Teilstück (78) zur Aufnahme des Steckschlüssels (46), einem Rumpf oder Mittelstück (24) und einem prismatischen Fuss oder hinterem Teilstück (26) besteht, wobei ein Sperrelement (22) mit Nuten zur Arretierung des Sperrelements (22) bei abgezogenem Schlüssel vorgesehen ist, welches Sperrelement (22) an dem vorderen Teilstück (78) des Schliesskerns (20) gegen Druckfederbelastung einer Druckfeder (40) axial entlang dem Schliesskern (20) gleitend bewegbar angeordnet ist, dadurch gekennzeichnet, dass sich die um das Mittelstück (24) herum angeordnete Druckfeder (40) einerseits in einer am Übergang vom Mittelstück (24) zum Fuss (26) angeordneten Ringnut (42) abstützt, andererseits in einer in dem Sperrelement (22) angeordneten Nut oder Schulter (43), welches Sperrelement (22) eine an die Kontur des Schlüsselbarts (46) angepasste Kontur besitzt und in eine an die Form des Sperrelements (22) angepasste Maske (44) einrastbar ist, die einen den Schlüsselbart (46) in zumindest einer Schlüsselstellung durchlassenden Durchbruch (48) sowie axial in das Gehäuseinnere weisende erste Vorsprünge (50) zur drehstarren Verankerung der Maske (44) in der Gehäusestirnfläche (52, 54) sowie axial und/oder radial verlaufende Nuten (62) oder zweite Vorsprünge zur Arretierung des Sperrelements (22) bei abgezogenem Schlüssel aufweist.

2. Vorreiberverschluss nach Anspruch 1, dadurch gekennzeichnet, dass die Maske (44) bei abgezogenem Schlüssel (46) für das Sperrelement (22) ein Lager bildet, das von der Vorreiberzunge (32) ausgehende Hebellasten an das Gehäuse (12) ableitet.

3. Vorreiberverschluss nach Anspruch 1 oder 2, dadurch gekennzeichnet, dass die Stirnfläche der Maske (44) mit der Schlüsselfangstirnfläche fluchtet oder bezüglich dieser nur geringfügig zurückspringt, und dass die Stirnfläche des Sperrelements (22) bei abgezogenem Schlüssel (46) zur Stirnfläche der Maske (44) fluchtet oder bezüglich dieser nur geringfügig vorspringt (bei Innenbrustschlüsseln, wie Vierkant) oder bezüglich dieser nur geringfügig zurückspringt (bei Bartschlüsseln, wie Doppelbartschlüsseln).

4. Vorreiberverschluss nach einem der Ansprüche 1 bis 3, dadurch gekennzeichnet, dass das Mittelstück (24) am Übergang zum Fuss (26) einen Umfangsrücksprung (92) zur Aufnahme einer O-Ringdichtung (90) besitzt.

5. Vorreiberverschluss nach einem der Ansprüche 1 bis 4, dadurch gekennzeichnet, dass die Ringnut (42) für die Druckfeder (40) eine Tiefe besitzt, die ausreicht, die Druckfeder (40) im zusammengedrückten Zustand ganz aufzunehmen.

6. Vorreiberverschluss nach einem der Ansprüche 1 bis 5, dadurch gekennzeichnet, dass die Maske (44) durch eine Blechkappe (56) gehalten ist, die den Aussenrand des Schlüsselfanges (14) umgreift.

7. Vorreiberverschluss nach einem der Ansprüche 1 bis 5, dadurch gekennzeichnet, dass die Maske (44) im Schlüsselfang (14) verklebt, verstemmt oder fest eingepresst ist.

8. Vorreiberverschluss nach einem der Ansprüche 1 bis 5, dadurch gekennzeichnet, dass die Maske (44) von einer den Aussenrand des Schlüsselfangs (14) umgreifenden Kappe (56) gebildet ist.

9. Vorreiberverschluss nach einem der Ansprüche 1 bis 8, dadurch gekennzeichnet, dass für Doppelbartschlüssel (46) die Maske einen Doppelschlitz oder zwei zueinander senkrecht angeordnete Doppelschlitze besitzt.

10. Vorreiberverschluss nach einem der Ansprüche 1 bis 8, dadurch gekennzeichnet, dass für Innenbrustschlüssel mit symmetrischem Vieleckprofil die Anzahl der gleichfalls symmetrisch angeordneten Verriegelungsnuten (162, Fig. 14) gleich der Anzahl der Innenbrustflächen ist.

## Claims

1. Key-operated rotary latch (10) capable of being arrested, having a latch core (20) capable of being actuated in a latch housing (12), and supported so as to be capable of being rotated and arrested, the latch core (20) comprising a front part piece (78) to receive the key (46), a body or middle piece (24) and a prismatic foot or rear part piece (26), a blocking element (22) being provided with slots to arrest the blocking element (22) with the key withdrawn, which blocking element (22) is positioned on the front part piece (78) of the latch core (20) so as to be capable of moving by sliding axially along the latch core (20) against spring pressure of a compression spring (40), characterized in that the compression spring (40) arranged around the middle piece (24) is supported on the one hand in a circular slot (42) arranged at the transition from the middle piece (24) to the foot (26), on the other hand in a slot or shoulder (43) arranged in the blocking element (22), which blocking element (22) has a contour matched to the contour of the key bit (46), and is capable of being engaged in a mask (44) matched to the shape of the blocking element (22), which mask has an opening (48) which allows the key bit (46) through in at least one key position as well as first projections (50) pointing axially into the housing interior to anchor the mask (44) non rotatably in the housing facing surface (52, 54) as well as slots (62) running axially and/or radially or second projections to arrest the blocking element (22) with the key withdrawn.

2. Rotary latch as claimed in claim 1, characterized in that the mask (44) with the key (46) withdrawn forms for the blocking element (22) a support that diverts leverage loads emanating from the rotary tongue (32) to the housing (12).

3. Rotary latch as claimed in claim 1 or claim 2, characterized in that the facing surface of the mask (44) is in alignment with the key holder facing surface, or recoils only slightly relative to the latter, and that the facing surface of the blocking element (22) with the key (46) withdrawn is in alignment with the facing surface of the mask (44) or projects only slightly relative to the latter (in the case of internal face keys, such as square keys) or recoils only slightly relative to the latter (in the case of bit keys, such as double bit keys).

4. Rotary latch as claimed in one of claims 1 to 3, characterized in that the middle piece (24) at the transition to the foot (26) has a circumferential recoil (92) to receive an O-ring seal (90).

5. Rotary latch as claimed in one of claims 1 to 4, characterized in that the circular slot (42) for the compression spring (40) has a depth sufficient to fully accomodate the compression spring (40) in the compressed state.

6. Rotary latch as claimed in one of claims 1 to 5, characterized in that the mask (44) is held by a sheet-metal cap (56) which grasps the outer edge of the key holder (14).

7. Rotary latch as claimed in one of claims 1 to 5, characterized in that the mask (44) is glued, wedged, or pushed securely into the key holder (14).

8. Rotary latch as claimed in one of claims 1 to 5, characterized in that the mask (44) is formed from a cap (56) grasping the outer edge of the key holder (14).

9. Rotary latch as claimed in one of claims 1 to 8, characterized in that for double bit keys (46) the mask has a double slot or two double slots arranged perpendicularly to each other.

10. Rotary latch as claimed in one of claims 1 to 8, characterized in that for internal face keys with symmetrical polygonal profile the number of likewise symmetrically arranged locking slots (162, Fig. 14) is equal to the number of internal faces.

## Revendications

1. Fermeture de tourniquet (10) pouvant être bloquée et actionnée par une clé à canon, cette fermeture comportant un noyau de fermeture (20) monté de façon à pouvoir être bloqué, à pouvoir tourner et à pouvoir être actionné dans un logement de fermeture (12), ce noyau de fermeture (20) étant constitué d'un tronçon avant (78) destiné à recevoir la clé à canon (46), d'un corps ou d'un tronçon central (24) et d'un pied prismatique ou d'un tronçon arrière (26), un élément de blocage (22) comportant des rainures en vue de le bloquer lorsque la clé est retirée, cet élément de blocage (22) étant disposé de façon à pouvoir exécuter un mouvement de glissement sur le tronçon avant (78) du noyau de fermeture (20) à l'encontre de la sollicitation d'un ressort à pression (40) axialement le long du noyau de fermeture (20), caractérisée en ce que le ressort à pression (40) disposé autour du tronçon central (24) prend appui, d'une part, dans une rainure annulaire (42) pratiquée à la transition entre le tronçon central (24) et le pied (26) et, d'autre part, dans une rainure ou un épaulement (43) prévu dans l'élément de blocage (22), lequel a un contour adapté à celui du panneton (46) et peut venir s'encliqueter dans un masque (44) adapté à la forme de l'élément de blocage (22), ce masque comportant une découpe (48) laissant passer le panneton (46) dans au moins une position de la clé, ainsi que des premières saillies (50) dirigées axialement vers l'intérieur du logement en vue d'assurer l'ancrage du masque (44) solidairement en rotation dans la surface frontale (52, 54) du logement, et également des secondes saillies ou des rainures (62) s'étendant axialement et/ou radialement en vue de bloquer l'élément de blocage (22) lorsque la clé est retirée.

2. Fermeture de tourniquet selon la revendication 1, caractérisée en ce que, lorsque la clé (46) est retirée, le masque (44) forme, pour l'élément de blocage (22), un palier dérivant, sur le logement (12), des charges de levier partant de la languette (32) du tourniquet.

3. Fermeture de tourniquet selon la revendication 1 ou 2, caractérisée en ce que la surface frontale du masque (44) est affleurante à la surface frontale de réception de la clé ou n'est que légèrement en retrait par rapport à celle-ci et en ce que, lorsque la clé (46) est retirée, la surface frontale de l'élément de blocage (22) est au ras de la surface frontale du masque (44) ou n'est que légèrement en saillie par rapport à celle-ci (par exemple, dans le cas de clés à appuis intérieurs tels qu'un carré) ou n'est que légèrement en retrait par rapport à cette surface frontale du masque (dans le cas de clés à panneton telles que des clés à panneton double).

4. Fermeture de tourniquet selon une des revendications 1 à 3, caractérisée en ce que, à la transition avec le pied (26), le tronçon central (24) comporte un retrait périphérique (92) pour recevoir un joint torique (90).

5. Fermeture de tourniquet selon une des re dications 1 à 4, caractérisée en ce que la rai annulaire (42) pratiquée pour le ressort à pres (40) a une profondeur qui est suffisante pour i voir entièrement ce ressort à pression (40) lors celui-ci est comprimé.

6. Fermeture de tourniquet selon une des re dications 1 à 5, caractérisée en ce que le mas (44) est maintenu par un chapeau en tôle (56) entoure le bord extérieur de l'arrêt de clé (14).

7. Fermeture de tourniquet selon une des re dications 1 à 5, caractérisée en ce que le mas (44) est collé, rabattu ou enfoncé fermement l'arrêt de clé (14).

8. Fermeture de tourniquet selon une des re dications 1 à 5, caractérisée en ce que le mas (44) est formé par un chapeau (56) entourai bord extérieur de l'arrêt de clé (14).

9. Fermeture de tourniquet selon une des re dications 1 à 8, caractérisée en ce que, pour clés à panneton double (46), le masque comp une fente double ou deux fentes doubles di sées perpendiculairement l'une à l'autre.

10. Fermeture de tourniquet selon une des vendications 1 à 8, caractérisée en ce que, des clés à appuis intérieurs et à profil polyg symétrique, le nombre des rainures de verr lage (162, fig. 14) également disposées sym quement est égal au nombre des surfaces d'a intérieures.

0175012

Fig.2.

46

Fig.1.

Fig.6.

Fig.3.

Fig.7.

Fig.4.

Fig.8.

Fig.5

Fig.9.

9

Fig.11.

146

Fig.12.

124
138
120

42

28

126

42

94

56

122

14

40

96

10

12

Fig.10.

Fig.13.

Fig.14.

148

162

144

50

137

122

136

136

Fig.15